# EUROPEAN PATENT SPECIFICATION

(11) **EP 1 271 673 B1**
(45) Date of publication and mention of the grant of the patent: **07.03.2007**
(21) Application number: 01912497.3
(22) Date of filing: 19.03.2001
(51) Int. Cl.: H01M 2/16, H01M 10/40, H01M 4/48

(54) **BATTERY-USE SEPARATOR, BATTERY-USE POWER GENERATING ELEMENT AND BATTERY**
BATTERIESEPARATOR, BATTERIESTROMERZEUGUNGSELEMENT UND BATTERIE
SEPARATEUR POUR PILE, ELEMENT GENERANT DE L'ELECTRICITE POUR PILE ET PILE

(30) Priority: 31.03.2000 JP 2000097744; 17.11.2000 JP 2000350580
(43) Date of publication of application: 02.01.2003
(73) Proprietor: YUASA CORPORATION, Takatsuki-shi, Osaka 569-1115 (JP)
(72) Inventor: NAKAGAWA, Hiroe, Yuasa Corporation, Takatsuki-shi, Osaka 569-1115 (JP); IZUCHI, Syuichi, Yuasa Corporation, Takatsuki-shi, Osaka 569-1115 (JP); KISHI, Takaaki, Yuasa Corporation, Takatsuki-shi, Osaka 569-1115 (JP)
(74) Representative: Sturt, Clifford Mark
(86) International application number: PCT/JP2001/002179
(87) International publication number: WO 2001/075991

(56) References cited:
- WO-A-97/12412
- JP-A- 3 245 457
- JP-A- 10 003 897
- JP-A- 2000 080 197
- US-A- 5 049 275
- WPI WORLD PATENT INFORMATION DERWENT, DERWENT, GB, vol. 1980, no. 49 PA - TEIJIN LTD PN - JP55137005 A, 2525, XP002164079

## Description

### <Technical Field>

The present invention relates to a separator for battery, a power generating element for battery and a battery and more particularly to a separator for battery, power generating element for battery and battery having both excellent battery properties and high liquid electrolyte leakage preventive properties.

### <Background Art>

A lithium secondary battery has been recently noted as power supply for portable devices such as portable telephone, PHS (simple portable telephone) and small-sized personal computer, power storage power supply and power supply for electric car. In particular, with the reduction of size and weight of the aforementioned portable devices, there has been a growing demand for the reduction of size and weight of lithium secondary battery.

In general, the exterior material of a lithium secondary battery formed by a positive electrode, a negative electrode and a separator is a thick metal. Thus, by providing the exterior material with a high strength, leakage of the liquid electrolyte from the exterior material, i.e., liquid electrolyte leakage is prevented. However, a problem arises that when the thickness and weight of the exterior material are reduced to meet the aforementioned requirements, liquid electrolyte leakage can easily occur.

As a method for inhibiting liquid electrolyte leakage there is known a method which comprises incorporating a crosslinkable monomer in a liquid electrolyte, subjecting the liquid electrolyte to crosslinking reaction to produce a jelly solidified gel electrolyte, and then using the solid electrolyte comprising a solidified liquid electrolyte, singly or in combination with a substrate, as a separator.

However, in the case of such a gel electrolyte, ions move through the gel at a very low rate than in the liquid electrolyte, easily causing an increase of internal resistivity of battery and drop of high rate discharge capacity. The resulting battery shows insufficient battery properties.

It is also disadvantageous in that the gel electrolyte has so low a strength that shortcircuiting can easily occur when used singly as a separator.

As another method for inhibiting liquid electrolyte leakage there is known a trial involving the use of a microporous film of a polymer which swells with a liquid electrolyte such as polyvinylidene fluoride (hereinafter abbreviated as "PVdF") or a film comprising a substrate having provided thereon the aforementioned microporous film as a separator. However, a swelling polymer such as PVdF can be easily dissolved in a liquid electrolyte remarkably particularly at a temperature as high as not lower than 80°C. Thus, a problem arises that shortcircuiting can easily occur across the electrodes at high temperature.

Further, since a polymer which swells with a liquid electrolyte absorbs the liquid electrolyte, the required amount of liquid electrolyte increases, giving a tendency that the liquid electrolyte leakage rather increases under pressure.

The present invention has been worked out in the light of the aforementioned object. An object of the present invention is to provide a separator for battery and a power generating element for battery from which a battery having both excellent battery properties and high liquid electrolyte leakage preventive properties can be prepared and a battery having both excellent battery properties and high liquid electrolyte leakage preventive properties.

### <Disclosure of the Invention>

In order to accomplish the aforementioned object, the inventors made extensive studies. As a result, it was surprisingly found that the use of a separator for battery having a specific structure makes it possible to obtain a battery having both excellent battery properties and high liquid electrolyte leakage preventive properties. Thus, the present invention has been worked out. In other words, the technical constitution and advantage of the present invention are as follows. However, the mechanism of action described later includes presumption and the present invention is not limited to whether the mechanism of action is correct or not.

In other words, the separator for battery according to Claim 1 is a separator for battery comprising a crosslinked material layer formed on a porous material and having a gas permeability.

In accordance with this arrangement, a
crosslinked material layer is provided on the porous material so that the separator for battery can be provided with at least a gas permeability. Thus, the resulting battery not only can be charged and discharged with the passage of ions in the liquid electrolyte through the micropores in the separator but also allows the separator to show a high wettability by the liquid electrolyte, making it easy for the liquid electrolyte to be absorbed by the separator. Accordingly, the use of the separator for battery according to Claim 1 makes it possible to prepare a battery which can comprise a reduced amount of liquid electrolyte and thus exhibits high liquid electrolyte leakage preventive properties. Further, since the liquid electrolyte can be absorbed by the separator into the micropores thereof, an ion path can be provided, making it possible to prepare a battery having excellent battery properties.

The separator for battery according to Claim 1 is characterized by being formed in such an arrangement that at least part of the aforementioned crosslinked material layer enters in pores formed in the surface of the aforementioned porous material and the penetration of a gas into the interior of the porous material through the aforementioned pores is allowed.

In accordance with this arrangement, in the case where a battery is prepared, pores having a high wettability by the liquid electrolyte and allowing the penetration of the liquid electrolyte are formed at least in the vicinity of the surface of the separator. Thus, a separator which can absorb the liquid electrolyte extremely easily by the capillary action of the aforementioned pores can be obtained.

In other words, the separator having the aforementioned arrangement utilizes a crosslinked material layer as a wetting layer. When the crosslinked material once absorbs the liquid electrolyte, the separator has a strong wettability by the liquid electrolyte thus absorbed rather than the wettability of the aforementioned crosslinked material itself. (It is thought that the strong wettability by the liquid electrolyte is attributed to the fact that the inner surface of the aforementioned micropores has substantially the same surface tension as that of the liquid electrolyte.)

Accordingly, the use of the separator for battery according to Claim 1 makes it possible to prepare a battery which can comprise a reduced amount of liquid electrolyte and thus exhibits high liquid electrolyte leakage preventive properties. Further, since the liquid electrolyte can be absorbed by the separator into the micropores thereof, an ion path can certainly be provided, making it possible to prepare a battery having excellent battery properties.

The separator for battery according to Claim 3 is characterized in that the average pore diameter of the pores in the aforementioned porous material is from 0.01 µm to 5 µm.

Thus, when the average pore diameter of the pores in the porous material is not smaller than 0.01 µm, the resulting battery can be provided with a lowered electrical resistivity across the positive electrode and the negative electrode and thus can be certainly provided with excellent battery properties.

Further, when the average pore diameter of the pores in the porous material is not greater than 5 µm, the resulting battery can difficultly cause the positive electrode and the negative electrode to come in contact with each other, making it assured that shortcircuiting across the two electrodes can be prevented.

The separator for battery according to Claim 1 is characterized in that the aforementioned crosslinked material layer is formed by a crosslinkable monomer having a molecular weight of from 170 to 50,000.

Thus, since the crosslinked material layer is formed by a crosslinkable monomer having a molecular weight of not smaller than 170 and the crosslink density of the crosslinked material is not too high, the resulting battery assures that the liquid electrolyte can be absorbed by the crosslinked material layer. Accordingly, the wettability of the separator by the liquid electrolyte can be enhanced.

Further, since the crosslinked material layer is formed by a crosslinkable monomer having a molecular weight of not greater than 50,000 and the viscosity of the crosslinkable monomer is not too high, it is assured that the crosslinkable monomer can penetrate into the interior of the porous material to cause crosslinking reaction. Accordingly, it is assured that a crosslinked material layer can certainly be formed in the interior of the porous material, making it possible to obtain a separator which can certainly absorb the liquid electrolyte by the interior thereof.

Thus, the separator for battery according to Claim 1 makes it assured that the battery can be provided with excellent battery properties and high liquid electrolyte leakage preventive properties.

The aforementioned crosslinked material layer has a polymer skeleton crosslinked by the polymerization of the aforementioned crosslinkable monomer and thus exhibits an excellent durability against high temperature and repetition of temperature change and can maintain its structure over an extended period of time.

Further, the inventors found that the aforementioned object can be accomplished also by the formation of a crosslinked layer from at least one of monomer having unsaturated bond, monomer having epoxy group and monomer having isocyanate group as the aforementioned crosslinkable monomer by a known crosslinking method. Accordingly, the separator for battery according to Claim 5 is characterized in that the aforementioned crosslinkable monomer is at least one of monomer having unsaturated bond, monomer having epoxy group and monomer having isocyanate group.

The separator for battery according to Claim 4 is characterized in that the aforementioned porous material comprises polyolefins as main component. A polyolefin exhibits a high resistance to the solvent for the electrolyte and thus can provide the battery with durability in particular. Further, the pores in a porous material comprising polyolefins as main component can easily shrink at high temperatures. When the battery is at high temperatures, the pores in the porous material can certainly exert an effect of breaking electric current, making it possible to improve the safety of the battery in particular.

The separator for battery according to Claim 1 is characterized in that the crosslinked material layer is porous. When such a separator for battery is impregnated with the liquid electrolyte, the liquid electrolyte in the aforementioned separator exists in the form of microscopic mixture of liquid electrolyte caught by the gel-like polymer when the crosslinked material in the aforementioned crosslinked material layer swells and free liquid electrolyte present in the micropores of the porous material and the aforementioned crosslinked material layer. Accordingly, when a lithium secondary battery is prepared from this separator for battery for example, the actual mobility of lithium ion during charge and discharge is governed by lithium ion in the free liquid electrolyte. Thus, smooth movement of lithium ion can be realized, making it possible to provide the battery with extremely excellent battery properties.

Further, in general, the difference in mobility between cation and anion causes the generation of concentration gradient during charge and discharge. Accordingly, when a uniform gel-like polymer electrolyte free of micropores is applied to lithium secondary battery for example, the aforementioned concentration gradient causes permeative flow in the aforementioned polymer electrolyte. The resulting uneven distribution of liquid electrolyte causes deterioration of cycle life performance of lithium secondary battery. In the separator for battery according to Claim 1, however, both the porous material and the aforementioned crosslinked material layer constituting the aforementioned separator have micropores (porous structure). Thus, the free liquid electrolyte present in the micropores cannot be caught by the crosslinked material, making it possible to relax unevenly distributed liquid electrolyte smoothly and hence obtain prolonged life and stable battery properties.

The separator for battery according to Claim 2 is characterized in that the gas permeability of the aforementioned separator for battery is not greater than 1.7 times that of the aforementioned porous material. In accordance with this arrangement, the aforementioned crosslinked material layer is formed leaving the pores in the surface of the porous material unfilled. Alternatively, the crosslinked material layer has a very high gas permeability. Accordingly, the use of such a separator for battery makes it possible to provide the battery with extremely excellent battery properties because most of the liquid electrolyte exists uncaught by the aforementioned crosslinked material layer, realizing smooth passage of ions through the separator and hence keeping the electrical resistivity across the positive electrode and negative electrode low.

The power generating element for battery according to Claim 6 comprises at least a separator for battery according to the present invention, a positive electrode and a negative electrode.

Since the separator for battery according to the present invention is a separator which exerts the aforementioned effect, the injection of a liquid electrolyte in the power generating element for battery having such an arrangement makes it possible to prepare a battery having both high liquid electrolyte leakage preventive properties and excellent battery properties.

The battery according to Claim 7 comprises at least a separator for battery according to the present invention, a positive electrode, a negative electrode, and a liquid electrolyte containing an electrolyte salt. Since the separator for battery according to the present invention is a separator which exerts the aforementioned effect, a battery having both high liquid electrolyte leakage preventive properties and excellent battery properties can be obtained.

The battery is characterized in that a metal-resin composite material is used as an exterior material. Since the metal-resin composite material is lighter than metal and can be easily formed into a thin product, the size and weight of the battery can be reduced.

The battery is characterized in that the aforementioned electrolyte salt is LiBF₄. LiBF₄ has a lower reactivity with water content present in the liquid electrolyte and thus causes less generation of hydrofluoric acid that causes corrosion of the electrode and the exterior material than other fluorine-containing lithium salts. Accordingly, a battery excellent particularly in durability can be obtained.

The battery is characterized in that the aforementioned liquid electrolyte comprises γ-butyrolactone as a solvent and the content of the aforementioned γ-butyrolactone in the aforementioned solvent is not smaller than 30% by weight. In particular, in the case where as the electrolyte there is used LiBF₄, the provision of a liquid electrolyte made of a solvent having a γ-butyrolactone content of not smaller than 30% by weight makes it possible to obtain a battery having an excellent high rate discharge capacity.

The battery is characterized in that the concentration of the aforementioned electrolyte salt in the aforementioned liquid electrolyte is from 1 mol/l to 5 mol/l.

Thus, since the concentration of the electrolyte salt in the aforementioned liquid electrolyte is not smaller than 1 mol/l and there is present an ion source in such an amount that a high ionic conductivity can be secured, a battery excellent particularly in battery properties can be obtained.

Further, since the concentration of the electrolyte salt in the aforementioned liquid electrolyte is not greater than 5 mol/l and electrolyte salts can difficultly separate out even at low temperatures, a battery excellent particularly in low temperature properties can be obtained.

### <Brief Description of the Drawing>

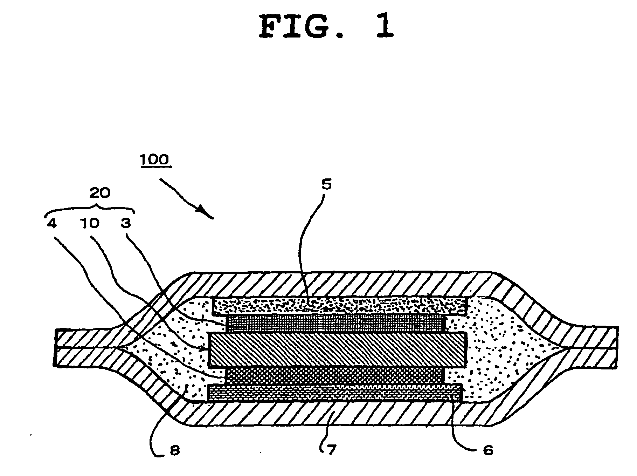

Fig. 1 is a diagrammatic sectional view of the lithium secondary battery of Example 1.

In the drawing, the reference numerals 3, 4, 7, 8, 10, 20 and 100 indicate a positive electrode, a negative electrode, an exterior material, a liquid electrolyte, a separator for lithium secondary battery (separator for battery), a power generating element for lithium secondary battery (power generating element for battery) and a lithium secondary battery (battery), respectively.

### <Best Mode for Carrying Out the Invention>

Embodiments of implementation of the present invention will be described hereinafter with reference to lithium secondary battery by way of example, but the present invention is not limited to the following embodiments of implementation of the present invention.

The separator for battery according to the present invention comprises a crosslinked material layer formed on a porous material and has a gas permeability. When the crosslinked material is formed on the porous material, the material, thickness, amount, etc. of the porous material and the crosslinked material are predetermined such that the separator has at least a gas permeability, that is, the resulting battery can be charged and discharged with the passage of ions in the liquid electrolyte through the separator.

The separator for battery is preferably formed in such an arrangement that at least part of the crosslinked material layer enters in pores formed in the surface of the aforementioned porous material and the penetration of a gas into the interior of the porous material through the aforementioned pores is allowed. In other words, in this arrangement, in the case where a lithium secondary battery is prepared, micropores having a high wettability by the liquid electrolyte and allowing the penetration of the liquid electrolyte are formed at least in the vicinity of the surface of the separator. The capillary action of the micropores can make it easy for the liquid electrolyte to be absorbed by the interior of the separator.

Accordingly, the separator for battery having the aforementioned arrangement can be used to prepare a lithium secondary battery which can comprise a reduced amount of liquid electrolyte and thus exhibits high liquid electrolyte leakage preventive properties. Further, since the liquid electrolyte can be absorbed by the separator into the interior thereof, an ion path can certainly be provided, making it possible to prepare a lithium secondary battery having excellent battery properties.

Since it is preferable that the crosslinked material layer is highly wettable by the liquid electrolyte and keeps the pores in the porous material unfilled, the amount of the crosslinked material layer is preferably from 1 to 10% by weight based on the weight of the porous material. When the amount of the crosslinked material exceeds 10% by weight, the crosslinked material layer can easily cause the pores in the porous material to be filled, giving a tendency that the electrical resistivity across the positive electrode and the negative electrode rises to deteriorate the battery properties. When the amount of the crosslinked material falls below 1% by weight, there occurs insufficient wettability by the liquid electrolyte, making it difficult for the liquid electrolyte to be absorbed by the crosslinked material. Thus, it is inevitable to abstain from restricting the amount of the liquid electrolyte for the purpose of assuring excellent battery properties. Therefore, it is made difficult to improve the liquid electrolyte leakage preventive properties of the lithium secondary battery. Accordingly, in order to obtain a lithium battery having excellent battery properties and high liquid electrolyte leakage preventive properties, the amount of the crosslinked material layer is preferably from 1% to 10% by weight, more preferably from 2% to 7% by weight, still more preferably from 3% to 5% by weight based on the weight of the porous material.

The crosslinked material is preferably formed by the crosslinking reaction of a crosslinkable monomer. Since the crosslinked material preferably has a swell high enough to absorb the liquid electrolyte certainly and can certainly penetrate in the interior of the porous material without blocking the porous material, the molecular weight of the crosslinkable monomer is from 170 to 50,000, more preferably from 200 to 30,000, still more preferably from 200 to 20,000.

When the molecular weight of the crosslinkable monomer falls below 170, the crosslink density of the crosslinked material is too high, giving insufficient wettability by the liquid electrolyte and hence making it difficult for the liquid electrolyte to be absorbed by the crosslinked material. Thus, it is inevitable to abstain from restricting the amount of the liquid electrolyte for the purpose of assuring excellent battery properties. Therefore, it is made difficult to improve the liquid electrolyte leakage preventive properties of the lithium secondary battery.

When the molecular weight of the crosslinkable monomer exceeds 50,000, the viscosity of the crosslinkable monomer is too high, making it difficult to assure that the crosslinkable monomer can penetrate in the interior of the porous material to cause crosslinking reaction by which a crosslinked material layer can be formed in the interior of the porous material. Thus, the liquid electrolyte can be difficultly absorbed by the interior of the separator, making it difficult to provide the lithium secondary battery with excellent battery properties and high liquid electrolyte leakage preventive properties. Further, the crosslinked material can be easily foamed into a film that can block the micropores, raising the electrical resistivity across the positive electrode and the negative electrode. This, too, makes it difficult to obtain a lithium secondary battery having excellent battery properties.

Accordingly, in order to certainly prevent the film formation of the crosslinked material and hence obtain excellent battery properties, the molecular weight of the crosslinkable monomer is more preferably not greater than 30,000. In order to suppress the viscosity of the crosslinkable monomer and hence obtain excellent battery properties and high liquid electrolyte leakage preventive properties certainly, the molecular weight of the crosslinked material is even more preferably not greater than 2,000.

Examples of such a crosslinkable monomer include monomer having unsaturated bond, monomer having epoxy group, monomer having isocyanate group, etc.

As the monomer having unsaturated bond there is preferably used a bifunctional or higher unsaturated monomer. Specific examples of such a monomer include bifunctional (meth)acrylates {ethylene glycol di(meth)acrylate, propylene glycol di(meth)acrylate, polyethylene glycol di(meth)acrylate having a polymerization degree of 2 or more, polypropylene glycol di(meth)acrylate having a polymerization degree of 2 or more, di (meth) acrylate of polyoxyethylene/polyoxypropylene copolymer, butanediol di(meth)acrylate, hexamethylene glycol di(meth)acrylate, etc.}, trifunctional (meth)acrylates (trimethylol propane tri(meth)acrylate, glycerin tri(meth)acrylate, tri(meth)acrylate of ethylene oxide adduct of glycerin, tri(meth)acrylate of propylene oxide adduct of glycerin, ethylene oxide of glycerin, tri(meth)acrylate of propylene oxide adduct, etc.}, tetrafunctional or higher polyfunctional (meth)acrylates {pentaerythritoltetra(meth)acrylate, diglycerinhexa-(meth)acrylate, etc.}, monomers represented by the following chemical formulae (1) to (5), etc. These monomers may be used singly or in combination.

### (Chem. 1)

### Chemical Formula (1)

CH₂=CH-COO-CH₂C(CH₃)₂CH₂-OOC(CH₂)₄COO-CH₂C(CH₃)₂CH₂-OOC-CH=CH₂

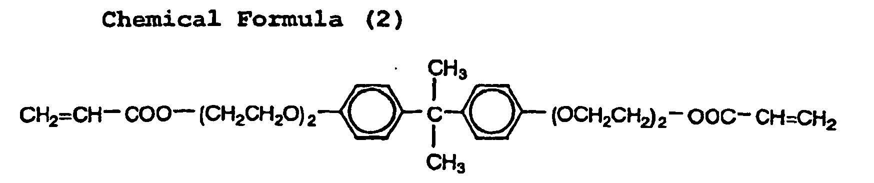

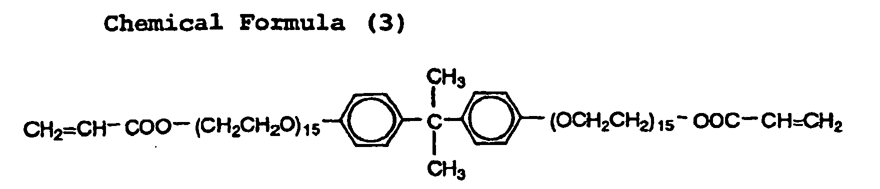

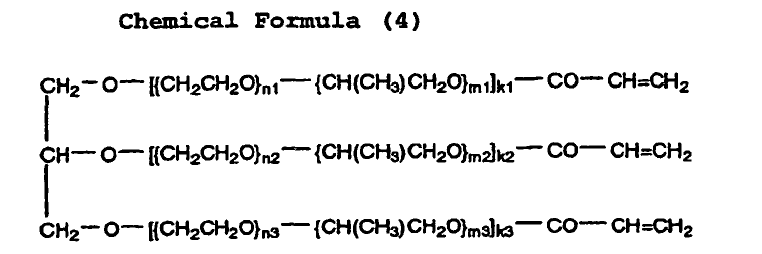

(wherein n1, n2, n3, m1, m2, m3, k1, k2 and k3 each represent an integer of 0 or more) 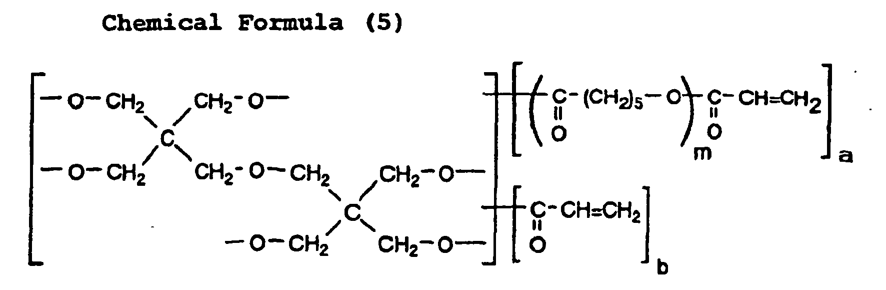 (wherein m represents an integer of 1 or more; and the sum of a and b is 6)

The bifunctional or higher unsaturated monomer exemplified above may comprise a monofunctional monomer incorporated therein for the purpose of adjusting the physical properties thereof or like purposes. Examples of the monofunctional monomer which can be added include unsaturated carboxylic acids {acrylic acid, methacrylic acid, crotonic acid, cinnamic acid, vinylbenzoic acid, maleic acid, fumaric acid, itaconic acid, citraconic acid, mesaconic acid, methylenemalonic acid, aconitic acid, etc.}, unsaturated sulfonic acids {styrenesulfonic acid, acrylamido-2-methylpropanesulfonic acid, etc.}, salts thereof (Li salt, Na salt, K salt, ammonium salt, tetraalkyl ammonium salt, etc.), compounds obtained by partly esterifying these unsaturated carboxylic acids with a C₁-C₁₈ aliphatic or alicyclic alcohol, alkylene (C₂-C₄) glycol, polyalkylene (C₂-C₄) glycol or the like (methyl malate, monohydroxyethyl malate, etc.), ammonia, compounds obtained by partly amidizing these unsaturated carboxylic acids with a primary or secondary amine (maleic acid monoamide, N-methymaleic acid monoamide, N,N-diethylmaleic acid monoamide, etc.), (meth)acrylic acid ester [ester of C₁-C₁₈ alipahtic (methyl, ethyl, propyl, butyl, 2-ethylhexyl, stearyl, etc.) alcohol with (meth)acrylic acid, and ester of alkylene (C₂-C₄) glycol (ethylene glycol, propylene glycol, 1,4-butanediol, etc.) and polyalkylene (C₂-C₄) glycol (polyethylene glycol, polypropylene glycol) with (meth)acrylic acid], (meth)acrylamide, N-substituted (meth)acrylamide [(meth)arylamide, N-methyl(meth)acrylamide, N-methylol (meth)acrylamide, etc.], vinyl ester, allyl ester [vinyl acetate, allyl acetate, etc.], vinyl ether, allyl ether [butyl vinyl ether, dodecyl allyl ether, etc.], unsaturated nitrile compounds [(meth)acrylorintrile, croton nitrile, etc.], unsaturated alcohols [(meth)allyl alcohol, etc.], unsaturated amines [(meth)allylamine, dimethylaminoethyl (meth)acrylate, diethylaminoethyl (meth)acrylate, etc.], heterocycle-containing monomers [N-vinylpyrrolidone, vinylpyridine, etc.], olefin-based aliphatic hydrocarbons [ethylene, propylene, butylene, isobutyrene, pentene, (C₆-C₅₀) α-olefin, etc.], olefinic alicyclic hydrocarbons [cyclopentene, cyclohexene, cycloheptene, norbornene, etc.], olefinic aromatic hydrocarbons [styrene, α-methylstyrene, stilbene, etc.], unsaturated imides [maleimide, etc.], halogen-containing monomers [vinyl chloride, vinylidene chloride, vinylidene fluoride, hexafluoropropylene, etc.], etc.

Examples of the aforementioned crosslinkable monomer having epoxy group include glycidylethers {bisphenol A diglycidyl ether, bisphenol F diglycidyl ether, brominated bisphenol A diglycidyl ether, phenol novolac glycidyl ether, cresol novolac glycidyl ether, etc.}, glycidyl esters {hexahydrophthalic acid glycidyl ester, dimeric acid glycidyl ester, etc.}, glycidyl amines {triglycidyl isocyanurate, tetraglycidyl diaminophenyl methane, etc.}, linear aliphatic epoxides {epoxidized polybutadiene, epoxidized soybean oil, etc.}, alicyclic epoxides {3,4-epoxy-6-methylcyclohexylmethyl carboxylate, 3,4-epoxycyclohexylmethyl carboxylate, etc.}, etc. These epoxy resins may be used singly or may comprise a hardener incorporated therein so that it is hardened before use.

Examples of the hardener to be used in the hardening of the aforementioned epoxy resin include aliphatic polyamines {diethylenetriamine, triethylenetetramine, 3,9-(3-aminopropyl)-2,4,8,10-tetraoxaspiro[5,5]undecane, etc.}, aromatic polyamines {methaxylenediamine, diaminophenylmethane, etc.}, polyamides {dimeric acid polyamide, etc.}, acid anhyrides {phthalic anhydride, tetrahydroxymethyl-phthalic anhydride, hexahydrophthalic anhydride, trimellitic anhyride, methylnadic anhydride}, phenols {phenolnovolac, etc.}, polymercaptanes {polysulfide, etc.}, tertiary amines {tris(dimethylaminomethyl)phenol, 2-ethyl-4-methylimidazole, etc.}, Lewis acid complexes {boron trifluoride-ethylamine complex, etc.}, etc.

Examples of the aforementioned crosslinkable monomer having isocyanate group include toluene diisocyanate, diphenylmethane diisocyanate, 1,6-hexamethylene diisocyanate, 2,2,4(2,2,4)-trimethylhexamethylene diisocyanate, p-phenylene diisocyanate, 4,4'-dicyclohexylmethane diisocyanate, 3,3'-dimethyldiphenyl-4,4'-diisocyanate, dianisidine diisocyanate, m-xylene diisocyanate, trimethylxylene diisocyanate, isophorone diisocyanate, 1,5-naphthalene diisocyanate, trans-1,4-cylohexyl diisocyanate, lysine diisocyanate, etc.

Examples of the aforementioned compound having active hydrogen crosslinking the monomer having isocyanate group include polyols and polyamines [bifunctional compound {water, ethylene glycol, propylene glycol, diethylene glycol, dipropylene glycol, etc.}, trifunctional compounds {glycerin, trimethylolpropane, 1,2,6-hexanetriol, triethanolamine, etc.}, tetrafunctional compounds {pentaerythritol, ethylenediamine, tolylenediamine, diphenylmethane-diamine, tetramethylolcyclohexane, methyl glucoside, etc.}, pentafunctional compounds {2,2,6,6-tetrakis(hydroxymethyl)cyclohexanol, diethylene triamine, etc.}, hexafunctional compounds {sorbitol, mannitol, dulcitole, etc.}, octafunctional compounds {sucrose, etc.}], polyether polyols {propylene oxide and/or ethylene oxide adduct of the aforementioned polyol or polyamine}, polyester polyols [condensate of the aforementioned polyol with polybasic acid {adipic acid, o,m,p-phthalic acid, succinic acid, azelaic acid, sebasic acid, licinolic acid}, polycaprolactone polyol {poly-ε-caprolactone, etc.}, polycondensate of hydroxcarboxylic acid, etc.], etc.

Examples of the catalyst for the reaction of the aforementioned monomer having isocyanate group with the compound having active hydrogen include organic tin compounds, trialkylphosphins, amines [monoamines {N,N-dimethylcyclohexyl amine, triethylamine, etc.}, cyclic monoamines {pyridine, N-methyl morpholine, etc.}, diamines {N,N,N' ,N'-tetramethylethylene diamine, N,N,N' ,N'-tetramethyl-1,3-butanediamine}, triamines {N,N,N',N'-pentamethyldiethylenetriamine, etc.}, hexamines {N,N,N',N'-tetra(3-dimethylaminopropyl)-methanediamine, etc.}, cyclic polyamines {diazabicyclooctane (DABCO), N,N'-dimethylpiperazine, 1,2-dimethylimidazole, 1,8-diazabicyclo(5,4,0)undecene-7 (DBU), salts thereof, etc.

As mentioned above, the crosslinked material layer has a polymer skeleton crosslinked by the polymerization of the aforementioned crosslinkable monomer and thus exhibits an excellent durability against high temperature and repetition of temperature change and can stably maintain its structure over an extended period of time.

Further, the crosslinked material may be made of a crosslinkable monomer comprising a physical property modifier incorporated therein in an amount such that the formation of the crosslinked material cannot be inhibited for the purpose of controlling the strength or physical properties thereof. Examples of the physical property modifiers include inorganic fillers {metal oxide such as silicon oxide, titanium oxide, aluminum oxide, magnesium oxide, zirconium oxide, zinc oxide and iron oxide and metal carbonate such as calcium carbonate and magnesium carbonate}, and polymers {polyvinylidene fluoride, vinylidene fluoride/hexafluoropropylene copolymer, polyacrylonitrile, polymethyl methacrylate}. The amount of these physical property modifiers to be added is normally not greater than 50% by weight, preferably not greater than 20% by weight.

While the crosslinked material layer has thus been described, the crosslinked material layer may be porous. In this arrangement, both the porous material and the aforementioned crosslinked material layer constituting the separator for lithium secondary battery have micropores (porous structure). Thus, the actual mobility of lithium ion during charge and discharge is governed by lithium ion in the free liquid electrolyte present in the aforementioned micropores. Therefore, smooth movement of lithium ion can be realized, making it possible to provide the lithium secondary battery with extremely excellent battery properties.

Further, since both the porous material and the aforementioned crosslinked material layer have micropores (porous structure), unevenly distributed liquid electrolyte produced during charge and discharge can be smoothly relaxed. Accordingly, the resulting lithium secondary battery can be provided with less deteriorated cycle life performance, a prolonged life and stable battery properties.

On the other hand, the non-porous crosslinked material layer is hard to be bulky as compared with the porous crosslinked material layer having the same weight. Accordingly, the porosity of whole separator for lithium secondary battery can be increased by using the non-porous crosslinked material layer and the internal resistivity of the battery can be set to be reduced.

In the case where the crosslinked material layer is not porous, the crosslinked material layer can be provided densely in the porous material and exhibits a high wettability by the liquid electrolyte as compared with the porous crosslinked material layer. Accordingly, it is preferred that a crosslinked material layer free of micropores (porous structure) be used when a porous material which can difficultly exhibit a high wettability and a liquid electrolyte are used in combination.

Thus, whether the crosslinked material layer is densely provided or rendered porous can be properly predetermined depending on the combination of the liquid electrolyte and the porous material to be used in the battery.

The porous material will be further described hereinafter.

The average pore diameter of pores in the porous material is preferably small enough to prevent shortcircuiting across the electrodes and great enough such that the electrical resistivity across the positive electrode and the negative electrode becomes not too high and thus is preferably from 0.01 µm to 5 µm. When the average pore diameter exceeds 5 µm, the contact of the finely particulate positive active material with the finely particulate negative active material can easily cause minute shortcircuiting. When the average pore diameter falls below 0.01 µm, the electrical resistivity across the positive electrode and the negative electrode rises, giving a tendency that the battery properties deteriorate. Thus, in order to avoid minute shortcircuiting, the average pore diameter of pores in the porous material is preferably from 0.01 µm to 5 µm, more preferably from 0.01 µm to 1 µm, even more preferably from 0.05 µm to 0.1 µm.

As the porous material there is preferably used a sheet-like porous material having a thickness of not greater than 30 µm. The gas permeability of the sheet-like porous material from the surface thereof to the back surface thereof is normally from 20 seconds/100 ml to 500 seconds/100 ml, more preferably from 40 seconds/100 ml to 200 seconds/100 ml, still more preferably from 50 seconds/100 ml to 150 seconds/100 ml. When the gas permeability falls below 20 seconds/100 ml, the contact of the finely particulate positive active material with the finely particulate negative active material can easily cause minute shortcircuiting. When the gas permeability exceeds 500 seconds/100 ml, the electrical resistivity across the positive electrode and the negative electrode rises, giving a tendency that the battery properties deteriorate.

Examples of the material of the porous material include polyolefins (polyethylene, polypropylene, etc.), polyesters (polyethylene terephthalate, polybutylene terephthalate, etc.), celluloses, etc. Preferred among these materials are polyolefins, which can improve the resistance to the solvent for the electrolyte and thus provide the lithium secondary battery with durability. Further, the pores in a porous material comprising polyolefins as main component can easily shrink at high temperatures. When the lithium secondary battery is at high temperatures, the pores in the porous material can certainly exert an effect of breaking electric current, making it possible to improve the safety of the lithium secondary battery. In this respect, too, it is preferred that polyolefins be used as material of the porous material.

The separator for lithium secondary battery according to the present invention can be prepared by impregnating or coating the above exemplified porous material with a monomer solution comprising the above exemplified crosslinkable monomer and optionally mixed with a solvent and a hardener or casting the monomer solution on the porous material, heating or irradiating the porous material with ultraviolet rays or electron rays so that the monomer is crosslinked to form a crosslinked material layer, and then optically drying the solvent.

As the solvent to be used in the monomer solution there may be used any solvent capable of dissolving the crosslinkable monomer therein without any restriction. Examples of such a solvent include commonly used chemically stable solvents such as methanol, ethanol, propanol, butanol, acetone, toluene, acetonitrile and hexane. Alternatively, water may be used depending on the crosslinkable monomer.

Further, the same kind of solvents as those constituting the liquid electrolyte described later may be used. Examples of the same kind of solvents as those constituting the liquid electrolyte include chemically stable solvents which can be commonly used as solvent constituting the liquid electrolyte for lithium secondary battery. Examples of these solvents include ethylene carbonate, propylene carbonate, dimethyl carbonate, diethyl carbonate, methyl ethyl carbonate, γ-butyrolactone, propiolactone, valerolactone, tetrahydrofurane, dimethoxyethane, diethoxyethane, methoxyethoxyethane, etc. However, the present invention is not limited to these solvents. These solvents may be used singly or in combination of two or more thereof. By predetermining the monomer solution so as to comprise a monomer and a solvent in combination that occurs in a uniform gel-like form after polymerized (crosslinked), a crosslinked material layer free of micropores (porous structure) can be fairly prepared.

In the case where the crosslinked material layer is rendered porous, as the solvent to be used in the aforementioned monomer solution there may be selected a solvent which can dissolve the aforementioned crosslinkable monomer therein and exhibits a lowered solubility of the macromer in the course to crosslinked material to the solvent during the polymerization (crosslinking) procedure. Such a solvent can be properly selected depending on the kind of the crosslinkable monomer, etc. Preferred examples of the solvent include organic solvents such as methanol, ethanol, propanol, butanol, acetone, toluene, acetonitrile and hexane and purified water, singly or in combination of two or more thereof, mixture of ethanol and dimethyl carbonate, mixture of toluene and ethanol, mixture of hexane and acetone, etc.

In the case where the combination of the crosslinkable monomer and the aforementioned solvent or the aforementioned mixture of solvents is used, the average diameter of the pores in the crosslinked material layer can be adjusted to the desired value by adjusting the mixing ratio of the solvents.

The mechanism in which the aforementioned crosslinked material layer can form a porous structure by selecting these solvents is not necessarily known. However, it is thought that the state of the monomer solution having the crosslinkable monomer dissolved therein changes from uniformity to phase separation during the polymerization process, thereby forming the porous structure. In other words, it is presumed that the crosslinked material layer having a porous structure has a crosslinked structure formed therein at the same time with the porous structure.

Further, in the present invention, since the porous material comprises a crosslinked material layer provided thereon, the porous structure of the crosslinked material layer can be easily formed by the aforementioned method. In other words, in general, when the monomer solution is formed into a film, the presence of foreign matters such as substrate accelerates the formation of pores in the aforementioned film. This is because if the aforementioned substrate is a porous material, the formation of pores in the aforementioned film can be further accelerated.

The concentration of the monomer in the aforementioned monomer solution is preferably not greater than 10% by weight, more preferably not greater than 5% by weight, still more preferably not greater than 3% by weight. When the concentration of the monomer exceeds 10% by weight, the pores in the porous material can be easily blocked by the crosslinked material layer to raise the electrical resistivity across the positive electrode and the negative electrode, giving a tendency that the battery properties deteriorate. In order to make it assured that the blocking of the pores in the porous material can be inhibited to prevent the rise of electrical resistivity, the concentration of the monomer in the monomer solution is more preferably not greater than 5% by weight. In order to make it assured that the pores in the porous material can be little blocked and can be provided with wettability by the liquid electrolyte, the concentration of the monomer in the monomer solution is still more preferably not greater than 3% by weight.

In the separator for battery according to the present invention, the gas permeability of the aforementioned separator for battery is preferably not greater than 1.7 times, more preferably not greater than 1.5 times, still more preferably not greater than 1.3 times that of the porous material. In practice, the gas permeability of the separator for battery is not smaller than 1.0 time that of the porous material.

When the gas permeability of the separator for battery exceeds 1.7 times that of the porous material, the pores in the porous material are substantially blocked by the crosslinked material layer or the porous crosslinked material constituting the crosslinked material layer itself has a very low gas permeability, causing the rise of the electrical resistivity across the positive electrode and the negative electrode and hence giving a tendency that the battery properties of the battery deteriorate.

However, when the gas permeability of the separator for battery is not greater than 1.7 times that of the porous material, most of the liquid electrolyte exists uncaught by the aforementioned crosslinked material layer, realizing smooth passage of ions through the separator and hence keeping the electrical resistivity across the positive electrode and negative electrode low. Thus, the lithium secondary battery can be provided with extremely excellent battery properties.

Such a separator for battery can be fairly prepared, e.g., by predetermining the kind of the crosslinkable monomer or adjusting the concentration of the monomer in the monomer solution or, if the crosslinked material layer is porous, the average diameter of the pores in the crosslinked material.

The positive electrode to be used in the power generating element for battery according to the present invention and the battery according to the present invention comprises a positive active material as a main constituent. Preferred examples of the positive active material include oxides capable of intercalating/deintercalting lithium ion. The aforementioned oxides are preferably composite oxides containing lithium such as LiCoO₂, LiMn₂O₄, LiNiO₂ and LiV₂O₅. These oxides are preferably in the form of powder having an average particle diameter of from about 1 to 40 µm.

The negative electrode to be used in the power generating element for battery according to the present invention and the battery according to the present invention comprises a negative active material as a main constituent. Examples of the negative active material include carbon-based material (mesophase carbon microbead, natural or artificial graphite, resin-calcined carbon material, carbon black, carbon fiber, etc.), metallic lithium, lithium alloy, etc.

The positive active material and the negative active material have been further described hereinabove. The positive electrode and the negative electrode are preferably prepared from an electrically-conducting material and a binder as constituents besides the aforementioned active materials as main constituent.

The electrically-conducting material is not limited so far as it is an electrically-conducting material which has no adverse effects on the battery properties. In practice, however, the electrically-conducting material may comprise electrically-conducting materials such as natural graphite (flake graphite, scaly graphite, earthy graphite, etc.), artificial graphite, carbon black, acetylene black, Ketjen black, carbon whisker, carbon fiber, metal (copper, nickel, aluminum, silver, gold, etc.), metal fiber and electrically-conducting ceramic material incorporated therein, singly or in admixture.

Preferred among these electrically-conducting materials is acetylene black from the standpoint of electrical conductivity and coatability. The amount of the electrically-conducting material to be incorporated is preferably from 1% to 50% by weight, particularly from 2% to 30% by weight based on the total weight of the positive electrode or negative electrode. The method for mixing these components involves physical mixing, ideally uniform mixing. To this end, mixing may be effected in a dry or wet process using a powder mixer such as V-shaped mixer, S-shaped mixer, crusher, ball mill and planetary ball mill.

As the binder there may be normally used a thermoplastic resin such as polytetrafluoroethylene, polyvinylidene fluoride, polyethylene and polypropylene, polymer having rubber elasticity such as ethylene-propylenediene terpolymer (EPDM), sulfonated EPDM, styrene butadiene rubber (SBR) and fluororubber and polysaccharide such as carboxymethyl cellulose singly or in admixture of two or more thereof. A binder having a functional group which reacts with lithium such as polysaccharide has been subjected to methylation or the like to deactivate the functional group. The amount of the binder to be incorporated is preferably from 1% to 50% by weight, particularly from 2% to 30% by weight based on the total weight of the positive electrode or the negative electrode.

The positive electrode and the negative electrode can be fairly prepared by kneading the positive active material or negative active material, the electrically-conducting material and the binder in the presence of an organic solvent such as toluene, forming the mixture into an electrode shape, and then drying the formed product, respectively.

The power generating element for battery according to the present invention comprises at least a separator for battery, a positive electrode and a negative electrode. As an embodiment of implementation of the power generating element there may be exemplified an arrangement comprising the above exemplified positive electrode and negative electrode disposed in close contact with each other with the separator for battery described in detail above interposed therebetween. Even in the case where the positive electrode, the negative electrode and the separator are independently received in the respective receiving portions of a battery package having a positive electrode receiving portion, a negative electrode receiving portion and a separator receiving portion as in the preparation of coin-shaped battery, an assembly comprising a positive electrode, a negative electrode and a separator is an embodiment of implementation of the power generating element for battery according to the present invention.

In the case of power generating element for battery, it is preferably arranged such that the positive electrode comes in close contact with the positive collector and the negative electrode comes in close contact with the negative collector. For example, as the positive collector there may be used aluminum, copper or the like treated with carbon, nickel, titanium, silver or the like on the surface thereof besides aluminum, titanium, stainless steel, nickel, calcined carbon, electrically-conducting polymer, electrically-conducting glass, etc. for the purpose of improving adhesion, electrical conductivity and oxidation resistance. As the negative collector there may be used copper or the like treated with carbon, nickel, titanium, silver or the like on the surface thereof besides copper, nickel, iron, stainless steel, titanium, aluminum, calcined carbon, electrically-conducting polymer, electrically-conducting glass, Al-Cd alloy, etc. for the purpose of improving adhesion, electrical conductivity and oxidation resistance. These materials may also be subjected to oxidation on the surface thereof.

The collector may be in the form of film, sheet, net, punched or expanded product, lath, porous material, foamed product and formed product of fibers besides foil form. The thickness of the collector is not specifically limited but may be from 1 µm to 500 µm. Preferred for positive collector among these collectors is aluminum foil, which exhibits an excellent oxidation resistance. Preferred for negative collector among these collectors are copper foil, nickel foil, iron foil and foil of alloy of some of these metals, which are stable in a reducing atmosphere, have an excellent electrical conductivity and are inexpensive. More preferably, the collector is a foil having a surface roughness of not smaller than 0.2 µmRa. This arrangement provides an excellent adhesion between the positive and negative electrodes and the collector. An electrolytic foil is preferably used because it has such a roughened surface. In particular, an electrolytic foil which has been subjected to "hana" surface treatment is most desirable.

Accordingly, in accordance with the aforementioned constitution of the power generating element for battery, the power generating element for battery is prepared from the separator for battery according to the present invention. Thus, a power generating element for battery can be provided which makes it possible to prepare a battery having both high liquid electrolyte leakage preventive properties and excellent battery properties.

The battery according to the present invention comprises at least a separator for battery, a positive electrode, a negative electrode, and a liquid electrolyte containing an electrolyte salt.

As such electrolyte salts there may be used lithium salts, which are stable in a commonly used wide potential range, singly or in combination. Examples of these lithium salts include LiBF₄, LiPF₆, LiClO₄, LiSO₃CF₃, LiN(SO₂CF₃)₂, LiN(SO₂CF₃)(SO₂C₄F₉), etc. Preferred among these lithium salts are LiBF₄ and LiPF₆ because they have a high stability. Even more desirable among these lithium salts is LiBF₄ because it has a lower reactivity with water content present in the liquid electrolyte and thus causes less generation of hydrofluoric acid that causes corrosion of the electrode and the exterior material than the other fluorine-containing lithium salts, making it possible to prepare a lithium secondary battery having an excellent durability.

Examples of the solvent constituting the liquid electrolyte include lactones {γ-butryolactone, γ-valerolactone, etc.}, cyclic carboxylic acid esters {ethylene carbonate, propylene carbonate, etc.}, chain-like carboxylic acid esters {diethyl carbonate, methyl ethyl carbonate, dimethyl carbonate, diphenyl carbonate, etc.}, chain-like esters {methyl acetate, methyl propionate, ethyl propionate, etc.}, cyclic ethers {tetrahydrofurane, 2-methyltetrahydrofurane, 1,3-dioxolane, etc.}, chain-like ethers {1,2-dimethoxyethane, ethylene glycol methyl ethyl ether, diethylene glycol dimethyl ether, diethylene glycol diethyl ether, polyethylene glycol di(C₁-C₄) alkylether having a polymerization degree of 3 or more, propylene glycol dimethyl ether, polypropylene glycol di(C₁-C₄) alkylether having a polymerization degree of 2 or more, etc.}, oxazolidinones {N-methyloxazolidinone, etc.}, imidazolines {N,N'-dimethylimidazoline, etc.}, sulfolanes {sulfolane, 2-methylsulfolane, etc.}, nitriles {acetonitrile, etc.}, sulfoxides (dimethylsulfoxide, etc.), amides {N,N-dimethylformamide, etc.}, pyrrolidones {N-methylpyrrolidone, etc.}, etc. These organic solvents may be used singly or in combination of two or more thereof as necessary. Preferred among these solvents are γ-butryrolactone, propylene carbonate, and ethylene carbonate because they have a high dielectric constant, a low vapor pressure and a low flammability. In particular, in the case where LiBF₄ is used as an electrolyte, the provision of a liquid electrolyte made of a solvent having a γ-butryrolactone content of not smaller than 30% by weight makes it possible to obtain a lithium secondary battery having an excellent high rate discharge capacity. Thus, a solvent having a γ-butryrolactone content of not smaller than 30% by weight is preferred.

The concentration of the electrolyte in the liquid electrolyte to be used in the battery of the present invention is preferably from 1 mol/l to 5 mol/l. Thus, when the concentration of the electrolyte salt in the aforementioned liquid electrolyte is not smaller than 1 mol/l, there is present an ion source in such an amount that a high ionic conductivity can be secured, making it possible to obtain a lithium secondary battery having excellent battery properties in particular. Further, when the concentration of the electrolyte salt in the aforementioned liquid electrolyte is not greater than 5 mol/l, electrolyte salts can difficultly separate out even at low temperatures, making it possible to obtain a lithium secondary battery having high low temperature properties in particular. More preferably, the concentration is from 1 mol/l to 3 mol/l, making it possible to further assure that the deposition of electrolyte salts at low temperatures can be prevented. Even more preferably, the concentration of the electrolyte is from 1.5 mol/l to 2.5 mol/l. When the concentration of electrolyte falls within this range, the liquid electrolyte has a high surface tension, making it possible to further assure that the liquid electrolyte can be retained on the porous material. Accordingly, the lithium secondary battery can be certainly provided with excellent battery properties and high liquid electrolyte leakage preventive properties.

The battery according to the present invention can be obtained, e.g., by inserting the power generating element for battery in a battery package for battery made of an exterior material, injecting the liquid electrolyte in the battery package, and then finally sealing the battery package. Alternatively, it may be obtained by receiving the positive electrode, the negative electrode and the separator independently in the respective receiving portions in a battery package having a positive electrode receiving portion, a negative electrode receiving portion and a separator receiving portion, injecting the liquid electrolyte into the battery package made of an exterior material, and then finally sealing the battery package as previously mentioned.

As the exterior material there is preferably used a metal-resin composite material, which is lighter than metal and can be easily formed into a thin product. For example, a known aluminum laminate film can be exemplified. This enables the reduction of the size and weight of the battery.

While the separator for battery, power generating element for battery and battery according to the present invention have been described with reference to separator for lithium secondary battery, power generating element for lithium secondary battery and lithium secondary battery by way of example as in the aforementioned embodiments, the separator of the present invention is not limited to use in lithium secondary battery but may be applied to other kinds of batteries such as aqueous system battery comprising water as a solvent for liquid electrolyte, e.g., alkaline battery and lead storage battery.

### <Example>

The present invention will be further described in the following examples and comparative examples, but the present invention is not limited thereto.

A lithium secondary battery 100 of the examples comprises a power generating element 20 for lithium secondary battery having a positive electrode 3 disposed in close contact with a positive collector 5 and a negative electrode 4 disposed in close contact with a negative collector 6, the two electrodes being laminated with a separator 10 for lithium secondary battery interposed therebetween, a liquid electrolyte 8 and an exterior material 7 as shown in Fig. 1. A process for the preparation of the lithium secondary battery having the aforementioned constitution will be described hereinafter.

The separator 10 for lithium secondary battery to be used in the lithium secondary battery 100 of the examples was prepared in the following manner. In the following examples, as an electron microscope there was used T-200 produced by JEOL Ltd. and gas permeability was measured according to JIS P-8117.

### "Preparation of separator (A) for lithium secondary battery"

As a monomer solution there was prepared an ethanol solution having 3% by weight of a bifunctional acrylate monomer having a structure represented by the aforementioned chemical formula (1) dissolved therein. The monomer solution was applied to a microporous polyethylene membrane (average pore diameter: 0.1 µm; porosity: 50%; thickness: 23 µm; weight: 12.52 g/m²; gas permeability: 89 seconds/100 ml) as a porous material, irradiated with electron rays so that the monomer was crosslinked to form a crosslinked material layer, and then dried at a temperature of 60°C for 5 minutes to obtain a separator (A) for lithium secondary battery. The separator (A) for lithium secondary battery had a thickness of 24 µm, a weight of 13.04 g/m², a gas permeability of 103 seconds/100 ml, a crosslinked material layer weight of about 4% by weight based on the weight of the porous material and a crosslinked material layer thickness of about 1 µm and thus kept the pores in the porous material substantially unfilled. As a result, the gas permeability of the separator (A) for lithium secondary battery was 1.16 times that of the microporous polyethylene membrane itself. When the crosslinked material layer was observed under electron microscope, no micropores (porous structure) were confirmed.

### "Preparation of separator (B) for lithium secondary battery"

A separator (B) for lithium secondary battery was prepared in the same manner as the aforementioned "separator (A) for lithium secondary battery" except that as the monomer solution there was used a mixture of 3% by weight of the bifunctional acrylate monomer having a structure represented by the aforementioned chemical formula (1), 73% by weight of ethanol and 24% by weight of purified water.

The separator (B) for lithium secondary battery had a thickness of 24 µm, a weight of 13.04 g/m², a gas permeability of 115 seconds/100 ml, a crosslinked material layer weight of about 4% by weight based on the weight of the porous material, a crosslinked material layer thickness of about 1 µm and an average pore diameter of a porous structure in the crosslinked material layer of 0.05 µm and thus kept the pores in the porous material substantially unfilled (as confirmed under electron microscope). As a result, the gas permeability of the separator (B) for lithium secondary battery was 1.3 times that of the microporous polyethylene membrane itself.

### "Preparation of separator (C) for lithium secondary battery"

A separator (C) for lithium secondary battery was prepared in the same manner as the aforementioned "separator (A) for lithium secondary battery" except that as the monomer solution there was used a mixture of 15% by weight of the bifunctional acrylate monomer having a structure represented by the aforementioned chemical formula (1), 65% by weight of ethanol and 20% by weight of purified water.

The separator (C) for lithium secondary battery had a thickness of 25 µm, a weight of 16.50 g/m², a gas permeability of 174 seconds/100 ml, a crosslinked material layer weight of about 4% by weight based on the weight of the porous material, a crosslinked material layer thickness of about 1.5 µm and an average pore diameter of a porous structure in the crosslinked material layer of 0.03 µm and thus kept the pores in the porous material half-filled (as confirmed under electron microscope). As a result, the gas permeability of the separator (C) for lithium secondary battery was 1.95 times that of the microporous polyethylene membrane itself.

In order to confirm the wettability of the separators (A), (B), (C), (D) and (E) for lithium secondary battery thus prepared by the liquid electrolyte, these separators were dipped in a liquid electrolyte having LiBF₄ dissolved in an concentration of 2 mol/l in a 4 : 3 : 3 (by volume) mixture of ethylene carbonate, γ-butyrolactone and propylene carbonate.

Since the liquid electrolyte having the aforementioned composition is made of a solvent having a high dielectric constant, a low vapor pressure and a low flammability, it not only can provide a lithium secondary battery with desired battery properties but also can difficultly cause defectives such as swelling of the exterior material of the lithium secondary battery and leakage of the liquid electrolyte even at high temperatures.

On the other hand, a microporous polyethylene membrane having the same material as the separator (A) for lithium secondary battery except that no crosslinked material layer was incorporated was dipped in the liquid electrolyte. Even after 1 hour of elapse, the microporous polyethylene membrane did not wet with the liquid electrolyte and was kept suspended on the liquid electrolyte in a white opaque form.

Accordingly, a lithium secondary battery cannot be prepared by combining the microporous polyethylene membrane free of crosslinked material layer with the liquid electrolyte having the aforementioned composition.

### "Preparation of positive electrode and negative electrode"

The positive electrode and the negative electrode to be used in the lithium secondary battery 100 of the examples were prepared in the following manner.

A mixed solution of lithium cobalt oxide as a positive active material, acetylene black as an electrically-conducting material (90 parts by weight), a polyvinylidene fluoride as a binder (5 parts by weight) and N-methyl-2-pyrrolidone (5 parts by weight) was applied to an aluminum foil as a positive collector 5, and then dried. The dried material was then pressed such that the thickness of the composite reached 0.1 mm to prepare a positive electrode 3 disposed in close contact with the positive collector 5 in a sheet form. Further, a negative electrode 4 disposed in close contact with the negative collector 6 was prepared in a sheet form in the same manner as the positive electrode 3 disposed in close contact with the aforementioned positive collector 5 except that as the negative active material there was used carbon and as the negative collector 6 there was used a copper foil.

### "Preparation of power generating element for lithium secondary battery and lithium secondary battery"

### (Example 1)

The positive electrode 3 in a sheet form thus prepared and the negative electrode 4 in a sheet form thus prepared were then laminated with the separator (A) for lithium secondary battery 10 interposed therebetween in such an arrangement that the positive electrode 3 and the negative electrode 4 were opposed to each other to prepare a power generating element 20 for lithium secondary battery disposed in close contact with the positive collector 5 and the negative collector 6. The power generating element 20 for lithium secondary battery having such an arrangement was inserted in a battery package pack made of an aluminum laminate film sealed at three sides. Subsequently, 2.2 g of a liquid electrolyte having LiBF4 dissolved in a 4 : 3 : 3 mixture of ethylene carbonate, γ-butyrolactone and propylene carbonate in a concentration of 2 mol/l was injected into the battery package pack which was then vacuum-sealed to prepare a lithium secondary battery 100 of Example 1 comprising an aluminum laminate film as an exterior material 7. The same procedure was followed to prepare lithium secondary batteries of Example 1 in a total of 100.

### (Example 2)

Lithium secondary batteries of Example 2 were prepared in a total of 100 in the same manner as mentioned above (Example 1) except that the aforementioned separator (A) for lithium secondary battery was replaced by the separator (B) for lithium secondary battery.

### (Comparative Example 1)

A lithium secondary battery of Comparative Example 1 was prepared in the same manner as in Example 1 except that as the separator there was used a nonwoven polyethylene terepthalate fabric having a microporous PVdF film formed thereon and the amount of the liquid electrolyte was 2.6 g. The same procedure was followed to prepare lithium secondary batteries of Comparative Example 1 in a total of 100.

### (Comparative Example 2)

A liquid electrolyte having 2 mols of LiBF₄ as an electrolyte salt dissolved in 1 l of γ-butyrolactone as a solvent was mixed with a bifunctional acrylate monomer having a structure represented by the aforementioned chemical formula (4) at a rate of 240 g of the bifunctional acrylate monomer per kg of the liquid electrolyte. The mixed solution was applied to a positive electrode, and then irradiated with electron rays so that the monomer was polymerized to obtain a gel-like electrolyte. A power generating element comprising a laminate of the positive electrode having the gel-like electrolyte layer and a negative electrode vacuum-impregnated with the liquid electrolyte in advance was then vacuum-sealed in the same manner as mentioned above (Example 1) to prepare a lithium secondary battery of Comparative Example 2. The same procedure was followed to prepare lithium secondary batteries of Comparative Example 2 in a total of 100.

### (Reference Example)

Lithium secondary batteries of reference example were prepared in a total of 100 in the same manner as mentioned above (Example 1) except that the aforementioned separator (A) for lithium secondary battery was replaced by the separator (C) for lithium secondary battery.

The lithium secondary batteries of Examples 1 and 2, Comparative Examples 1 and 2 and reference example thus prepared were then compared in electrical properties according to the following evaluations A to F. The results are set forth in Table 1.
A: Discharge capacity after 5-hour rate discharge at 25°C and a cut-off voltage of 2.7 V
B: Discharge capacity after 0.5-hour rate discharge at 25°C and a cut-off voltage of 2.7 V
C: Discharge capacity after 0.33-hour rate discharge at 25°C and a cut-off voltage of 2.7 V
D: Discharge capacity after 5-hour rate discharge at - 20°C and a cut-off voltage of 2.7 V
E: Percentage of number of batteries shortcircuited after preparation of lithium secondary battery in prepared number of lithium secondary batteries
F: Leaked amount of liquid electrolyte collected with a filter paper from liquid electrolyte which has come out 15 minutes after pressing a 4.2 V-charged battery cut at one side thereof at a load of 300 kg so that it undergoes shortcircuiting across the positive electrode and the negative electrode.

### (Table 1)

**Table 1**

| Lithium secondary battery | A | B | C | D | E | F |
|---|---|---|---|---|---|---|
| | 25°C-5 hr rate discharge capacity (mAh) | 25°C-0.5 hr rate discharge capacity (mAh) | 25°C-0.33 hr rate discharge capacity (mAh) | -20°C-5 hr rate discharge capacity (mAh) | Occurrence of short-circuiting (%) | Leaked amount of liquid electrolyte after 300 kg load leakage test (mg) |
| Example 1 | 499 | 447 | 420 | 349 | 0 | 10 |
| Example 2 | 500 | 449 | 430 | 354 | 0 | 10 |
| Comparative Example 1 | 440 | 347 | 239 | 242 | 3 | 50 |
| Comparative Example 2 | 440 | 320 | 207 | 251 | 5 | 40 |
| Reference Example | 429 | 319 | 133 | 100 | 0 | 8 |

As can be seen in the results set forth in Table 1, the lithium secondary batteries of Examples 1 and 2 exhibit a great discharge capacity (see the results of evaluations A to C), particularly a great discharge capacity in a short period of time (see the results of evaluations B and C), as compared with those of Comparative Examples 1 and 2. Further, the lithium secondary batteries of Examples 1 and 2 showed excellent results also in the discharge capacity at low temperatures (see the results of evaluation D). In particular, the lithium secondary battery of Example 2 showed extremely excellent results in the discharge capacity (evaluations A to D). Moreover, none of the lithium secondary batteries of Examples 1 and 2 showed shortcircuiting after preparation (see the results of evaluation E). In addition, the lithium secondary batteries of Examples 1 and 2 showed little leakage of electrolyte under load and thus exhibited high liquid electrolyte leakage preventive properties despite the use of light and thin aluminum laminate film as an exterior material (see the results of evaluation F).

On the contrary, the lithium secondary battery of Comparative Example 1 was confirmed to have shown a discharge capacity drop presumably attributed to the blocking of the micropores in the separator by swelling of PVDF (see the results of evaluations A to D). Some of the lithium secondary batteries of Comparative Example 1 showed shortcircuiting during preparation (see the results of evaluation E). Further, the lithium secondary battery of Comparative Example 1 showed liquid electrolyte leakage under load as large as about five times that of the lithium secondary battery of Example 1 (see the results of evaluation F).

Further, the lithium secondary battery of Comparative Example 2 showed a small discharge capacity (see the results of evaluations A to D). Some of the lithium secondary batteries of Comparative Example 2 showed shortcircuiting (see the results of evaluation E). The lithium secondary battery of Comparative Example 2 also showed liquid electrolyte leakage under load as large as several times that of the lithium secondary battery of Example 1 (see the results of evaluation F).

Moreover, the lithium secondary battery of the reference example, which had been prepared from the separator (C) for lithium secondary battery having a gas permeability of 1.95 times (> 1.7 times) that of the microporous polyethylene membrane itself, showed excellent results in the evaluations E and F but showed insufficient results in the discharge capacity (evaluations A to D).

It was confirmed from the aforementioned results that the lithium secondary batteries of Examples 1 and 2 of the present invention are lithium secondary batteries which have both excellent battery properties and high liquid electrolyte leakage preventive properties and can be certainly prevented from shortcircuiting.

### <Industrial Applicability>

The separator for battery according to the present invention comprises a crosslinked material layer formed on a porous material and having a gas permeability as described in Claim 1. Thus, the resulting battery not only can be charged and discharged with the passage of ions in the liquid electrolyte through the separator but also allows the separator to show a high wettability by the liquid electrolyte, making it easy for the liquid electrolyte to be absorbed by the separator. Accordingly, a separator for battery can be provided which makes it possible to prepare a battery which can comprise a reduced amount of liquid electrolyte and thus exhibits high liquid electrolyte leakage preventive properties. Further, since the liquid electrolyte can be absorbed by the separator into the interior thereof as mentioned above, an ion path can certainly be provided. Accordingly, the separator for battery can be provided which makes it possible to prepare a battery having excellent battery properties.

In accordance with the separator for battery according to the present invention, in the case where a battery is prepared, micropores having a high wettability by the liquid electrolyte and allowing the penetration of the liquid electrolyte are formed at least in the vicinity of the surface of the separator as described in Claim 1. Thus, a separator which can absorb the liquid electrolyte extremely easily by the capillary action of the aforementioned micropores can be obtained. Accordingly, a separator for battery from which a battery excellent particularly in battery properties can be prepared can be provided.

In accordance with the separator for battery according to the present invention, the average pore diameter of the pores in the porous material is from 0.01 µm to 5 µm as described in Claim 3. Thus, in the case where a battery is prepared, the electrical resistivity across the positive electrode and the negative electrode is not too high and the positive electrode and the negative electrode can difficultly come in contact with each other. Accordingly, a separator for battery can be provided which makes it possible to prepare a battery excellent particularly in electrical properties which can certainly prevent itself from undergoing shortcircuiting across the electrodes.

In accordance with the separator for battery according to the present invention, the crosslinked material layer is formed by a crosslinkable monomer having a molecular weight of from 170 to 50,000 as described in Claim 1. Thus, in the case where a battery is prepared, the liquid electrolyte can be certainly absorbed by the crosslinked material layer and the crosslinked material layer can be certainly formed in the interior of the porous material, making it assured that the liquid electrolyte can be absorbed by the interior of the separator. Accordingly, a separator for battery can be provided which makes it possible to prepare a battery having both excellent battery properties and high liquid electrolyte leakage preventive properties.

In accordance with the separator for battery according to the present invention, the crosslinkable monomer is at least one of monomer having unsaturated bond, monomer having epoxy group and monomer having isocyanate group as described in Claim 5, making it possible to provide a separator for battery which can be easily prepared by a known crosslinking method.

In accordance with the separator for battery according to the present invention, the porous material comprises polyolefins as main component as described in Claim 4. In the case where a battery is prepared, the polyolefin exhibits a high resistance to the solvent for the electrolyte and certainly exerts an effect of breaking electric current at high temperatures. Accordingly, a separator for battery can be provided which makes it possible to prepare a battery excellent particularly in durability and safety.

In accordance with the separator for battery according to the present invention, the crosslinked material layer is porous as described in Claim 1. In particular, in the case of lithium secondary battery, the actual mobility of lithium ion during charge and discharge is governed by lithium ion in the free liquid electrolyte present in the aforementioned micropores. Thus, smooth movement of lithium ion can be realized, making it possible to provide the extremely excellent battery properties for the lithium secondary battery. Accordingly, a separator for battery can be provided which makes it possible to prepare a battery excellent particularly in battery properties.

Further, the free liquid electrolyte present in the micropores cannot be caught by the crosslinked material, making it possible to relax unevenly distributed liquid electrolyte smoothly and hence provide a separator for battery from which a battery having a prolonged life and stable battery properties can be prepared.

In accordance with the separator for battery according to the present invention, the gas permeability of the aforementioned separator for battery is not greater than 1.7 times that of the aforementioned porous material as described in Claim 2. In the case where a battery is prepared from such a separator for battery, most of the liquid electrolyte exists uncaught by the aforementioned crosslinked material layer, realizing smooth passage of ions through the separator and hence keeping the electrical resistivity across the positive electrode and negative electrode low. Thus, the battery can be provided with extremely excellent battery properties. Accordingly, a separator for battery can be provided which makes it possible to prepare a battery excellent particularly in battery properties.

The power generating element for battery according to the present invention comprises at least a separator for battery according to the present invention, a positive electrode and a negative electrode as described in Claim 9. Thus, a power generating element for battery can be provided which makes it possible to prepare a battery having both high liquid electrolyte leakage preventive properties and excellent battery properties.

The battery according to the present invention comprises at least a separator for battery according to the present invention, a positive electrode, a negative electrode, and a liquid electrolyte containing an electrolyte salt as described in Claim 7. Thus, a battery having both high liquid electrolyte leakage preventive properties and excellent battery properties can be provided.

The battery according to the present invention comprises as an exterior material a metal-resin composite material which can be easily formed into a thin shape . Thus, a separator for battery can be provided which makes it possible to prepare a battery having reduced size and weight and having both excellent battery properties and high liquid electrolyte leakage preventive properties.

In accordance with the battery according to the present invention, the electrolyte salt is LiBF₄ causing less generation of hydrofluoric acid that causes corrosion of the electrode and the exterior material. Accordingly, a battery excellent particularly in durability can be obtained.

In accordance with the battery according to the present invention, the liquid electrolyte comprises γ-butyrolactone as a solvent and the content of the γ-butyrolactone in the solvent is not smaller than 30% by weight. Accordingly, a battery excellent particularly in high rate discharge capacity can be provided.

In accordance with the battery according to the present invention, the concentration of the electrolyte salt in the aforementioned liquid electrolyte is from 1 mol/l to 5 mol/l. Thus, there is present an ion source in such an amount that a conductivity can be secured and electrolyte salts can difficultly separate out. Accordingly, a battery excellent particularly in battery properties and low temperature properties can be provided.

## Claims

1. A separator for battery comprising a crosslinked material layer formed on a porous material and having a gas permeability, which is formed in such an arrangement that at least part of said crosslinked material layer enters in pores formed in the surface of said porous material and the penetration of a gas into the interior of the porous material through said pores is allowed, wherein said crosslinked material layer is formed by a crosslinkable monomer having a molecular weight of from 170 to 50,000, and wherein said crosslinked material layer is porous.

2. The separator for battery as claimed in Claim 1, wherein the gas permeability of said separator for battery is not greater than 1.7 times that of said porous material.

3. The separator for battery as claimed in Claim 1 or 2, wherein the average pore diameter of the pores in said porous material is from 0.01 µm to 5 µm.

4. The separator for battery as claimed in any one of Claims 1 to 3, wherein said porous material comprises polyolefins as main component.

5. The separator for battery as claimed in any one of Claims 1 to 4, wherein said crosslinkable monomer is at least one of monomer having unsaturated bond, monomer having epoxy group and monomer having isocyanate group.

6. A power generating element for battery comprising at least a separator for battery as claimed in any one of Claims 1 to 5, a positive electrode and a negative electrode.

7. A battery comprising at least a separator for battery as claimed in any one of Claims 1 to 6, a positive electrode, a negative electrode, and a liquid electrolyte containing an electrolyte salt.

## Patentansprüche

1. Batterieseparator, umfassend eine quervernetzte Materialschicht, die aus einem porösen Material gebildet ist und Gasdurchlässigkeit besitzt und die in einer derartigen Anordnung gebildet ist, dass wenigstens ein Teil des quervemetzten Materials in Poren eintritt, die in der Oberfläche des porösen Materials ausgebildet sind, und dass das Eindringen eines Gases in das Innere des porösen Materials durch die Poren ermöglicht ist, wobei die quervernetzte Materialschicht durch ein quervernetzbares Monomer mit einem Molekulargewicht von 170 bis 50 000 gebildet wird und wobei die quervernetzte Materialschicht porös ist.

2. Batterieseparator nach Anspruch 1, wobei die Gasdurchlässigkeit des Batterieseparators nicht größer als das 1,7fache des porösen Materials ist.

3. Batterieseparator nach Anspruch 1 oder 2, wobei der mittlere Porendurchmesser der Poren in dem porösen Material von 0,01 µm bis 5 µm ist.

4. Batterieseparator nach einem der Ansprüche 1 bis 3, wobei das poröse Material als Hauptbestandteil Polyolefine umfasst.

5. Batterieseparator nach einem der Ansprüche 1 bis 4, wobei das quervernetzbare Monomer wenigstens eines von Monomer, das ungesättigte Bindung besitzt, Monomer, das die Epoxygruppe besitzt, und Monomer, das die Isocyanatgruppe besitzt, ist.

6. Stromerzeugungselement für eine Batterie, das wenigstens einen Batterieseparator, wie in einem der Ansprüche 1 bis 5 beansprucht, eine positive Elektrode und eine negative Elektrode umfasst.

7. Batterie, die wenigstens einen Batterieseparator, wie in einem der Ansprüche 1 bis 6 beansprucht, eine positive Elektrode, eine negative Elektrode und einen Flüssigelektrolyten, der ein Elektrolytsalz enthält, umfasst.

## Revendications

1. Séparateur pour batterie comprenant une couche de matériau réticulé formée sur un matériau poreux et ayant une perméabilité au gaz, qui est formé selon un agencement tel qu'au moins une partie de ladite couche de matériau réticulé entre dans des pores formés dans la surface dudit matériau poreux et la pénétration d'un gaz à l'intérieur du matériau poreux par l'intermédiaire desdits pores est autorisée, dans lequel ladite couche de matériau réticulé est formée par un monomère réticulable ayant un poids moléculaire de 170 à 50 000, et dans lequel ladite couche de matériau réticulé est poreuse.

2. Séparateur pour batterie selon la revendication 1, dans lequel la perméabilité au gaz dudit séparateur pour batterie n'est pas supérieure à 1,7 fois celle dudit matériau poreux.

3. Séparateur pour batterie selon la revendication 1 ou 2, dans lequel le diamètre de pore moyen des pores dans ledit matériau poreux est de 0,01 µm à 5 µm.

4. Séparateur pour batterie selon l'une quelconque des revendications 1 à 3, dans lequel ledit matériau poreux comprend des polyoléfines comme composant principal.

5. Séparateur pour batterie selon l'une quelconque des revendications 1 à 4, dans lequel ledit monomère réticulable est au moins un monomère ayant une liaison non saturée, un monomère ayant un groupe époxy et un monomère ayant une groupe isocyanate.

6. Elément générateur de puissance pour batterie comprenant au moins un séparateur pour batterie selon l'une quelconque des revendications 1 à 5, une électrode positive et une électrode négative.

7. Batterie comprenant au moins un séparateur pour batterie selon l'une quelconque des revendications 1 à 6, une électrode positive, une électrode négative, et un électrolyte liquide contenant un sel électrolytique.
